(19) Europäisches Patentamt
European Patent Office
Office européen des brevets

(11) EP 0 859 028 B1

(12) EUROPÄISCHE PATENTSCHRIFT

(45) Veröffentlichungstag und Bekanntmachung des Hinweises auf die Patenterteilung:
**01.08.2001 Patentblatt 2001/31**

(51) Int Cl.[7]: **C08L 71/02**, C08L 33/12, C08G 81/02, C08F 8/14

(21) Anmeldenummer: **98101676.9**

(22) Anmeldetag: **31.01.1998**

(54) **Polymethacrylsäure-Polyalkylenoxid-Blockcopolymere, Verfahren zu ihrer Herstellung und ihre Verwendung als Dispergiermittel**

Polymethacrylic acid -polyoxyalkylene block copolymer, method for their production and their use as dispersants

Copolymères en bloc à base d'acide polymethacrylique et polyoxyalkylene, leur procédé de preparation et leur utilisation comme dispersants

(84) Benannte Vertragsstaaten:
**BE DE ES GB IT NL**

(30) Priorität: **13.02.1997 DE 19705470**

(43) Veröffentlichungstag der Anmeldung:
**19.08.1998 Patentblatt 1998/34**

(73) Patentinhaber: **Goldschmidt AG**
**45127 Essen (DE)**

(72) Erfinder:
- **Esselborn, Eberhard**
  **45147 Essen (DE)**
- **Fock, Jürgen, Dr.**
  **40470 Düsseldorf (DE)**
- **Knebelkamp, Arno, Dr.**
  **45131 Essen (DE)**

(56) Entgegenhaltungen:
**EP-A- 0 601 457** **EP-A- 0 613 910**
**EP-A- 0 622 378**

- **DATABASE WPI Section Ch, Week 8949 Derwent Publications Ltd., London, GB; Class A14, AN 89-359914 XP002078333 & JP 01 268709 A (TOA GOSEI CHEM IND LTD) , 26. Oktober 1989**
- **DATABASE WPI Section Ch, Week 9222 Derwent Publications Ltd., London, GB; Class A14, AN 92-175868 XP002078334 & DD 297 281 A (TECH HOCHSCHULE SCHORLEMMER C), 2. Januar 1992**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft Polymethacrylsäure-Polyalkylenoxid-Blockcopolymere (im folgenden: Polymethacrylsäure-b-Polyalkylenoxid-Copolymere) des Typs AB und ABA und deren Alkali- oder Ammoniumsalze, wobei A einen Polymethacrylsäure-Block und B einen Polyalkylenoxid-Block bedeuten.

Die Erfindung betrifft ferner Poly-t-butylmethacrylat-b-Polyalkylenoxid-Copolymere als neuartige Zwischenprodukte zur Herstellung der erfindungsgemäßen Polymeren.

Die Erfindung betrifft ferner ein Verfahren zur Herstellung derartiger Blockcopolymerisate sowie deren Verwendung. Die Produkte können beispielsweise als Emulgatoren sowie als Dispergiermittel für die Dispergierung anorganischer Materialien in wäßrigen Medien eingesetzt werden.

Polymethacrylsäure-b-Polyalkylenoxid-Copolymere sind bekannt. Ihre Herstellung bereitet jedoch erhebliche Probleme. Aus dem wenig umfangreichen Stand der Technik sind zu nennen:

In J. Polym. Sci. Part A 30, 2251-2261, 1992, werden AB (BA)-, ABA- und BAB-Blockcopolymere auf Basis von Polyethylenoxid und Polymethacrylsäure beschrieben. Diese Produkte werden über eine sogenannte Precursorroute hergestellt, indem man zunächst durch sequentielle, anionische Polymerisation von t-Butylmethacrylat und Ethylenoxid bzw. umgekehrt Ethylenoxid und t-Butylmethacrylat ein Poly-t-butylmethacrylat-b-Polyethylenoxid-Copolymer bzw. ein Polyethylenoxid-b-Poly-t-butylmethacrylat-Copolymer herstellt, aus welchem man durch eine säurekatalysierte Abspaltung von Isobuten aus dem Poly-t-butylmethacrylat-Segment die gewünschten Polyethylenoxid-b-Polymethacrylsäure-Copolymere erhält. Diese Verfahrensweise ist aber technisch kaum durchführbar, da die anionische Polymerisation sehr reine, wasserfreie Lösungsmittel (insbesondere Tetrahydrofuran) und Reaktanden erfordert. Die Reaktion muß zudem bei tiefen Temperaturen von etwa -78 °C vorgenommen werden. Überdies ist der Einsatz spezieller Alkalimetallinitiatoren (Kaliumnaphthalid oder Diphenylmethylkalium) notwendig.

Ähnlich beschreiben Ulbricht et al. in Eur. Polym. J. 27, 673-680, 1991, die Darstellung von Poly-t-butylmethacrylat-b-Polyethylenoxid- bzw. Polyethylenoxid-b-Poly-t-butylmethacrylat-Diblockcopolymeren über die anionische Polymerisation. Die Autoren verweisen auf Nebenreaktionen: U. a. führt die Verwendung von Cumylkalium als Initiator für die Polymerisation von t-Butylmethacrylat bei einer Reaktionstemperatur von 25 °C zu einer Reihe von unerwünschten Nebenreaktionen, erkennbar an einer Verbreiterung der Molekulargewichtsverteilung und nicht-quantitativen Monomerumsätzen.

In Macromolecules 15, 223-227, 1982, wird über die Synthese von Poly-t-butylmethacrylat-b-Polyethylenoxid-b-Poly-t-butylmethacrylat-Copolymeren (ABA-Typ) berichtet. Als initiierende Spezies werden lithiierte Diester des Polyethylenoxids eingesetzt. Auch dieses Verfahren bedingt äußerste Reinheit der verwendeten Reagenzien und relativ niedrige Polymerisationstemperaturen (-25 bis 0 °C). Die erhaltenen Produkte weisen eine recht breite Molekulargewichtsverteilung auf, was auch in diesem Fall auf das Auftreten von unerwünschten Nebenreaktionen hinweist.

Die vorliegende Erfindung befaßt sich mit dem technischen Problem der Herstellung von Blockcopolymeren, deren Segmente aus Alkylenoxiden und Methacrylsäure bzw. deren Salzen gebildet werden. Die gewünschten Blockcopolymeren sollen in möglichst einfacher Weise, frei von Nebenreaktionen und in hoher Ausbeute zugänglich sein, um eine industrielle Fertigung dieser Verbindungen zu ermöglichen.

Überraschenderweise wurde nun gefunden, daß die gewünschten Blockcopolymere in einfacher Weise hergestellt werden können, indem man zunächst ein Poly-t-butylmethacrylat-Segment mit einer endständigen Ester- oder Carbonsäuregruppe, welches durch eine radikalische Polymerisation von t-Butylmethacrylat in Gegenwart von ester- oder carbonsäurefunktionellen Mercaptanen des Typs $R(H)\text{-}OC(O)\text{-}(CH_2)_p\text{-}SH$ erhalten wird, mit einem mono- bzw. dihydroxyfunktionellen Polyalkylenoxidsegment der allgemeinen Struktur $R_1\text{-}(OC_nH_{2n})_o\text{-}OH$ bzw. $H\text{-}(OC_nH_{2n})_o\text{-}OH$ in den erforderlichen stöchiometrischen Verhältnissen, in Gegenwart eines Veresterungs- oder Umesterungskatalysators miteinander umsetzt und das so erhaltene Poly-t-butylmethacrylat-b-Polyalkylenoxid-Copolymer unmittelbar daran anschließend unter Abspaltung von Isobuten unter Erhalt der verknüpfenden Estergruppe in das entsprechende Polymethacrylsäure-b-Polyalkylenoxid-Copolymere überführt.

Gegenstand der Erfindung sind somit zunächst AB- und ABA-Blockcopolymere der allgemeinen Formeln I bzw. II

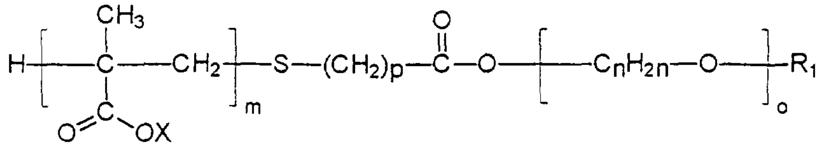

Formel I

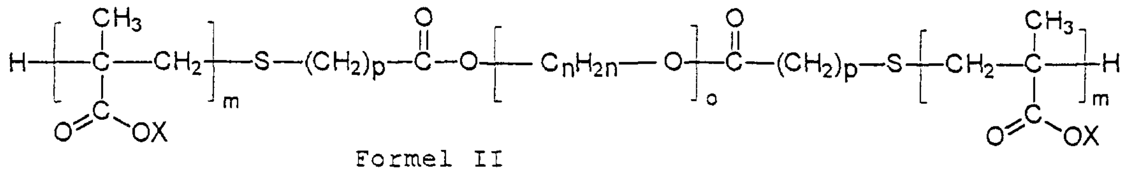

Formel II

wobei

| | |
|---|---|
| der Rest $R_1$ | einen Alkyl-, Alkaryl-, Alkenyl- oder Sulfopropylrest bedeutet, |
| m | einen mittleren Zahlenwert von ≥ 3 aufweist, |
| p | eine Zahl von 1 bis 6, |
| n | eine Zahl von 2 bis 18, |
| o | eine Zahl ≥ 1 und |
| X | ein Kation ist. |

$R_1$ ist gewöhnlich abgeleitet von einem Alkohol $R_1OH$, der als Startalkohol für die Polymerisation des Oxyalkylens fungiert.

Beispiele für die Reste $R_1$ sind der Methyl-, Butyl-, Stearyl-, Allyl-, Hexenyl-, Nonylphenyl- oder Oleylrest.

Bevorzugt für $R_1$ sind Methyl- und Butylreste.

Ist n = 2, enthält der Polyetherrest ausschließlich Oxyethyleneinheiten. Ist der Wert für n > 2, besteht der Polyetherrest aus Oxyethyleneinheiten und anteilig aus Oxyalkyleneinheiten, deren Kohlenstoffzahl zwischen 3 und 18 liegt. Dabei kann n den Wert einer gebrochenen Zahl zwischen 2 und 18 annehmen. Vorzugsweise besteht der Oxyalkylenblock aus Oxyethyleneinheiten, wobei gegebenenfalls zusätzlich zu den Oxypropylen- auch Oxybutyleneinheiten vorhanden sein können. Oxyalkyleneinheiten mit einer Kohlenstoffzahl von 4 bis 18 sind dann bevorzugt, wenn oleophile Eigenschaften des Produktes angestrebt werden.

X ist ein Kation. Vorzugsweise ist X ein Wasserstoff-, Alkali- oder Ammoniumrest, der gegebenenfalls alkylsubstituiert sein kann. Beispiele solcher substituierter Ammoniumreste sind die Reste $NH(CH_3)_3$-, $NH(C_2H_5)_3$- und $NH(CH_2$-$C_6H_5)$ $(CH_3)_2$-. Es können darüber hinaus die aus dem Stand der Technik für Polymethacrylsäure-Polymere bekannten Kationen ausgewählt werden (z. B. Neutralisation mit Tetrabutylammoniumhydroxid oder Triethanolamin).

Die Indices m und o können gleich (sofern m und o ≥ 3) oder verschieden sein und weisen üblicherweise einen mittleren Zahlenwert von ≥ 3 auf. Besonders bevorzugt sind für m Zahlenwerte von 4 bis 30 und für o Werte von 20 bis 100.

Beispiele erfindungsgemäßer Blockcopolymere sind:

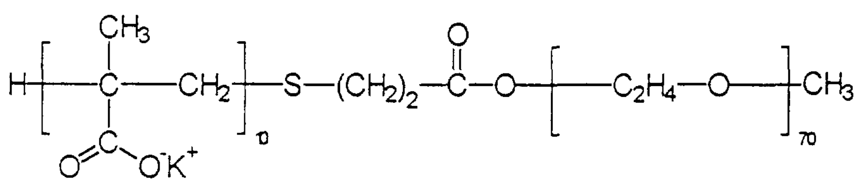

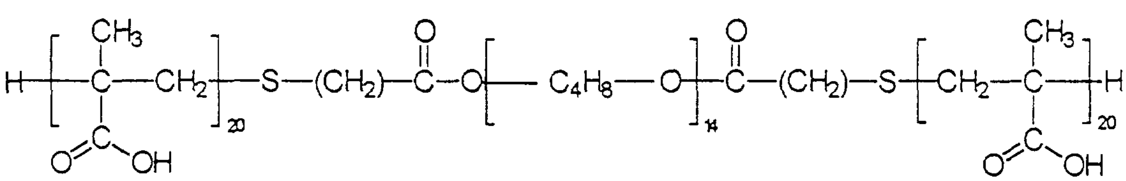

Ein weiterer Gegenstand der Erfindung sind die als Zwischenprodukte entstehenden t-Butylester der Polyalkylenoxid-b-Polymethacrylsäure-Copolymeren, die den allgemeinen Formeln

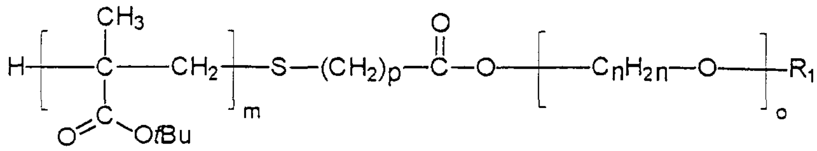

Formel III

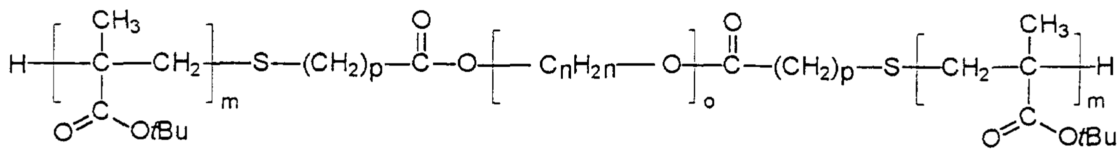

Formel IV

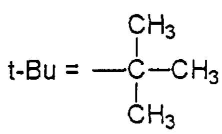

entsprechen. Dabei haben die Reste und Indices die bereits angegebenen Bedeutungen. Diese Zwischenprodukte sind kausal für die Struktur und Eigenschaften der Endprodukte. Sie können gegebenenfalls einer eigenständigen Verwertung, zum Beispiel zur Modifizierung von Oberflächeneigenschaften von Kunststofformkörpern, zugeführt werden, so daß es zu einer Erhöhung der Oberflächenpolarität kommt.

Beispiele dieser Zwischenprodukte sind:

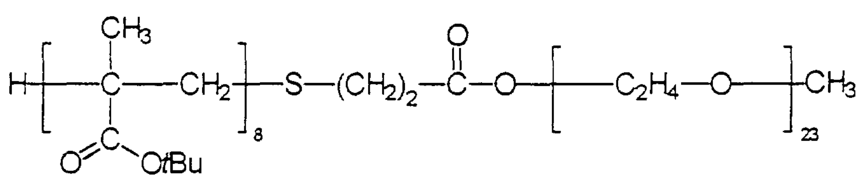

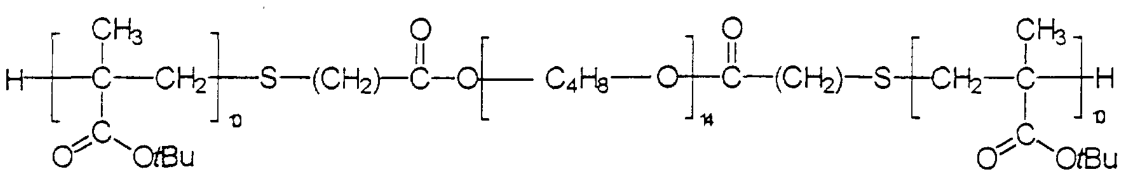

Ein weiterer Gegenstand der Erfindung besteht in der Herstellung der erfindungsgemäßen Blockcopolymeren. Dieses Verfahren ist dadurch gekennzeichnet, daß man

a) Polymerisate der allgemeinen Formel

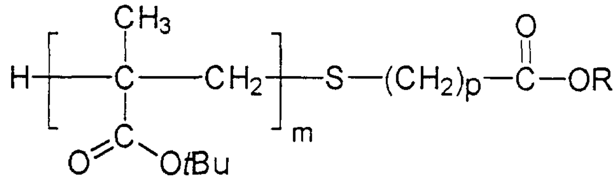

in der die Indices die bereits genannten Bedeutungen haben und der Rest R sich von einem an sich bekannten Kettenregler des Typs ROC(O)-$(CH_2)_p$-SH ableitet, bei dem R ein Wasserstoff- oder Alkylrest mit 1 bis 12 Kohlenstoffatomen bedeutet, mit Polymerisaten der allgemeinen Formel

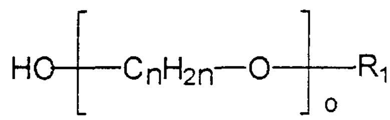

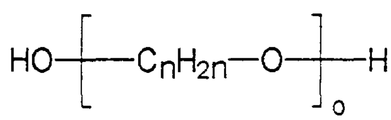

im Molverhälnis 1,1 : 1,0 bis 1,0 : 1,1 (zur Darstellung von AB-Blockcopolymeren) bzw. 1,1 : 0,5 bis 1,0 : 0,55 (zur Darstellung von ABA-Blockcopolymeren) unter Zusatz von an sich bekannten Katalysatoren, gegebenenfalls in Gegenwart eines inerten Lösungsmittels umestert und

b) die erhaltenen Polymerisate der allgemeinen Formeln III und IV bei Temperaturen oberhalb 60 °C in Gegenwart von Säure als Katalysator und gegebenenfalls eines Lösungsmittels oder oberhalb von 160 °C ohne Katalysator unter Abspaltung von Isobuten in die gewünschten Blockcopolymerisate der allgemeinen Formeln I und II überführt und

c) gegebenenfalls in an sich bekannter Weise in das Alkali- oder Ammoniumsalz umwandelt.

In dem Verfahrensschritt a) erfolgt somit eine selektive Umesterung bzw. Veresterung eines durch radikalische Polymerisation erhaltenen Polymethacrylsäure-t-butylesters, zu dessen Herstellung als Starter ein ester- oder carbonsäurefunktionelles Alkylmercaptan verwendet worden war, mit einem mono- oder dihydroxyfunktionellen Polyalkylenoxid-Segment. Diese Hydroxygruppen reagieren selektiv mit der durch die Regelung eingebrachten, terminalen Estergruppe des Poly-t-butylmethacrylat-Segmentes. Deshalb ist das Brückenglied

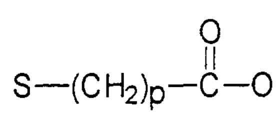

charakteristisch für die erfindungsgemäßen Blockcopolymeren. Für die Umesterung wird vorzugsweise ein an sich bekannter, neutraler Umesterungskatalysator verwendet. Beispiele hierfür sind Alkyltitanate, wie i-Propyl-, n-Butyl- oder i-Butyltitanat, ferner Stannate, wie Dialkylzinnacetathalogenid oder Zinndialkylester, insbesondere Dibutylzinndilaurat. Für die Veresterung gelangen bevorzugt Zinn(II)oxalat oder bekannte alkalische Veresterungskatalysatoren, wie z. B. Kaliumhydroxid, zum Einsatz.

In dem zweiten Verfahrensschritt b) wird

b1) bei Temperaturen oberhalb 60 °C in Gegenwart von Säure als Katalysator, insbesondere von p-Toluolsulfonsäuremonohydrat, und gegebenenfalls in Anwesenheit eines Lösungsmittels, wie z. B. Dioxan oder Lösungsmittelgemischen, wie z. B. Toluol/Dioxan, oder

b2) bei Temperaturen oberhalb von 160 °C ohne Katalysator

unter Abspaltung von Isobutylen das gewünschte Blockcopolymerisat erhalten, welches dann in das geforderte Alkali- oder Ammoniumsalz überführt werden kann.

Es war nun besonders überraschend, daß unter den gewählten Reaktionsbedingungen einerseits die selektive Verknüpfung der beiden Polymersegmente (Verfahrensschritt a)) gelingt, ohne daß es zu erkennbaren Nebenreaktionen an den t-Butylestergruppen kommt, und auch im Verfahrensschritt b) die Abspaltung von Isobuten mit hoher Selektivität, d. h. ohne Spaltung der im Verfahrensschritt a) geknüpften Estergruppe, erfolgt.

Besonders bevorzugt verläuft die durch Säure katalysierte Abspaltung des Isobutens bei Temperaturen von 80 bis 100 °C in Gegenwart eines Katalysators. Bei der thermischen Abspaltung bei höheren Temperaturen kommt es zur Ausbildung von anhydridischen Strukturen, welche wieder in bekannter Weise in die freie Säure überführt werden können.

Ein weiterer Gegenstand der Erfindung besteht in der Verwendung der Produkte als Emulgatoren, insbesondere als Dispergier- und Emulgiermittel in wäßrigen Medien.

Bevorzugte Anwendungsgebiete der erfindungsgemäßen Polymerisate sind ihre Verwendung als Dispergiermittel oder Suspensionsstabilisatoren für Pigmente und Füllstoffe, z. B. von Metalloxiden in keramischen Werkstoffen, von Pigmenten in Tintenstrahlfarben und von Füllstoffen in thermo- und duroplastischen Kunststoffen. Das erfindungsgemäße Verfahren und die Eigenschaften der erfindungsgemäßen Blockcopolymeren werden in den folgenden Beispielen noch näher erläutert.

<u>Beispiel 1A</u>

Herstellung eines Poly-t-butylmethacrylats durch radikalische Polymerisation in Gegenwart von Mercaptoessigsäuremethylester als Kettenüberträger

Eine Lösung von 1,47 g Azodiisobuttersäurenitril und 106,1 g 3-Mercaptoessigsäuremethylester in 150 g Xylol und 1137 g t-Butylmethacrylat (tBMA) wird innerhalb von 4 h in einen mit 150 g Xylol gefüllten Reaktor gegeben; das vorgelegte Lösungsmittel hat dabei eine Temperatur von etwa 120 °C und befindet sich unter einer Stickstoffatmosphäre. Nach Beendigung der Reaktion werden zunächst etwa 400 ppm Hydrochinonmonomethylether zugegeben und die Lösung auf etwa 40 °C abgekühlt, dann werden das Lösungsmittel und Restmonomere bei 110 °C/1 Torr abdestilliert, woraufhin eine farblose, viskose Flüssigkeit verbleibt.

Aus der gelpermeationschromatographischen Untersuchung ergibt sich für das erhaltene Polymerisat ein numerisches Molekulargewicht Mn (GPC) von 1350 und für das Gewichtsmittel des Molekulargewichtes Mw (GPC) 2170, der Uneinheitlichkeitsfaktor beträgt somit 1,61. Aus dem Vergleich des aus der NMR-Endgruppenanalyse erhaltenen Molekulargewichtes (Mn/NMR) von 1150 und dem dampfdruckosmometrisch ermittelten Molekulargewicht (Mn/Osmometrie) ergibt sich eine Esterfunktionalität von 1,04. Der Restmonomerengehalt beträgt < 0,1 %.

<u>Beispiele 2A bis 4A</u>

Herstellung von Poly-t-butylmethacrylaten verschiedenen Molekulargewichtes durch radikalische Polymerisation in Gegenwart von Mercaptocarbonsäuremethylestern

Es wird Verfahren wie in Beispiel 1A mit der Ausnahme, daß die molaren Verhältnisse von t-Butylmethacrylat zu dem entsprechenden Kettenregler, wie in Tabelle 1 angegeben, verändert werden.

Tabelle 1

| Beispiel Nr. | Molverh. tBMA/ Regler | Mn/NMR | Mn/Osmometrie | Mn/GPC (PMMA-Stand.) | Uneinheitlichkeit U = Mw/Mn |
|---|---|---|---|---|---|
| 1A | 8/1 | 1150 | 1200 | 1350 | 1,61 |
| 2A | 4/1 | 630 | 650 | 680 | 1,52 |
| 3A | 20/1 | 2700 | 2850 | 2950 | 1,84 |
| 4A[1] | 8/1 | 1200 | 1250 | 1300 | 1,71 |

[1] Regler: 3-Mercaptopropionsäuremethylester

Beispiel 1B

Herstellung eines α-Methyl-ω-hydroxypolyethylenoxids

64 g (2 Mol) Methanol und 23 g (0,33 Mol) Kaliummethylat werden in einen Reaktor gegeben. Nach sorgfältiger Spülung mit Reinstickstoff wird auf 110 °C erhitzt, und es werden 2360 g (ca. 54 Mol) Ethylenoxid so schnell zugegeben, daß die Innentemperatur 120 °C und der Druck 6 bar nicht überschreiten. Nach vollständiger Einleitung des Ethylenoxids wird die Temperatur so lange auf 115 °C gehalten, bis ein konstanter Manometerdruck das Ende der Nachreaktion anzeigt. Schließlich werden bei 80 bis 90 °C die nicht umgesetzten Monomeren im Vakuum entfernt.

Das erhaltene Produkt wird mit Hilfe von Phosphorsäure neutralisiert und das Wasser durch Destillation, das entstandene Kaliumphosphat durch Filtration zusammen mit einem Filterhilfsmittel entfernt. Das Molekulargewicht aus der Bestimmung der Hydroxylzahl (Mn/OH-Zahl) bei einer angenommenen Funktionalität von 1 beträgt 1015.

In der Tabelle 2 findet sich eine Auswahl weiterer monofunktioneller (Beispiele 1B bis 3B) bzw. difunktioneller Polyether (Beispiele 4B und 5B), die für die Synthese der erfindungsgemäßen Blockcopolymeren (Beispiele 1C bis 6C bzw. 1D bis 6D) eingesetzt wurden. Bei den Produkten in den Beispielen 4B und 5B handelt es sich um kommerziell erhältliche Produkte.

Tabelle 2

| Polyether aus Beispiel | % Ethylenoxid | % Propylenoxid | Mn (OH-Zahl) |
|---|---|---|---|
| 1B | 100 | - | 1015 |
| 2B | 100 | - | 2890 |
| 3B | 85 | 15 | 2945 |
| 4B[1] | 100 | - | 1050 |
| 5B[2] | - | - | 1030 |

1 Polyethylenglykol

2 Polyoxytetramethylenetherglykol (PolyTHF 1000/BASF)

Beispiel 1C

Herstellung eines Poly-t-butylmethacrylat-b-Polyethylenoxid-(AB)-Copolymeren

600 g (ca. 0,5 Mol) des in Beispiel 1A beschriebenen geregelten Poly-t-butylmethacrylates und 510 g (ca. 0,5 Mol) des monohydroxyfunktionellen Polyethylenoxids (s. Beispiel 1B), gelöst in etwa 250 ml Toluol, werden unter Reinstickstoff auf etwa 100 °C erwärmt, und anschließend wird das Lösungsmittel unter gleichzeitiger Entfernung möglicherweise vorhandenen Wassers abdestilliert. Danach erfolgt bei einer Temperatur von 115 °C die Zugabe von 3,4 g (0,3 Gew.-%) Isopropyltitanat und unmittelbar danach die Einstellung eines Vakuums von etwa 2 Torr. Das bei der Reaktion freiwerdende Methanol wird dabei, neben anderen flüchtigen Bestandteilen (Toluol, Isopropanol), kontinuierlich entfernt und kondensiert. Nach ca. 4 h ist die Reaktion beendet, die Rest-OH-Zahl der Reaktionsmischung beträgt 2,3, entprechend einem Umsatz von etwa 91 %. Aus der gaschromatographischen Untersuchung des Destillats (0,48 Mol) ergibt sich ein Umsatz von 96 %.

Aus der gelpermeationschromatographischen Untersuchung erhält man ein numerisches Molekulargewicht (Mn/GPC) von 2850, die Uneinheitlichkeit (U = Mw/Mn) beträgt 1,26. Die dampfdruckosmometrische Molekulargewichtsbestimmung ergibt einen Wert von 2170.

Beispiel 2C

Herstellung eines Poly-t-butylmethacrylat-b-Polyethylenoxid-b-Poly-t-butylmethacrylat-(ABA)-Copolymeren in Gegenwart eines inerten Lösungsmittels

600 g (ca. 0,5 Mol) des in Beispiel 1A beschriebenen geregelten Poly-t-butylmethacrylates und 260 g (ca. 0,25 Mol) des dihydroxyfunktionellen Polyethylenoxids (s. Beispiel 4B), gelöst in etwa 500 ml Toluol, werden in einem Reaktor mit aufgesetzter Fraktionierkolonne unter Reinstickstoff auf etwa 110 °C erwärmt und zunächst ein geringer Teil des Lösungsmittels unter Normaldruck solange abdestilliert, bis sichtbar keine Wasserspuren mehr vorhanden sind. Danach erfolgt bei einer Temperatur von 115 °C die Zugabe von 2,6 g (0,3 Gew.-%) Isopropyltitanat. Das bei der Reaktion freiwerdende Methanol wird durch Fraktionierung vom Toluol getrennt. Nach einer Reaktionszeit von ca. 4

bis 5 h beträgt die Kopftemperatur 110 °C; die Reaktion ist dann beendet. Die Rest-OH-Zahl der Reaktionsmischung beträgt unter diesen Bedingungen ca. 1. Aus der gaschromatographischen Untersuchung des Destillats (0,48 Mol) ergibt sich ein Umsatz von 98 %.

Aus der gelpermeationschromatographischen Untersuchung erhält man ein numerisches Molekulargewicht (Mn/GPC) von 4300, die Uneinheitlichkeit (U = Mw/Mn) beträgt 1,44.

Beispiele 3C bis 6C

Herstellung von Poly-t-butylmethacrylat-b-Polyethylenoxid- (AB bzw. ABA)-Copolymeren

Es wird grundsätzlich verfahren wie in den Beispielen 1C bzw. 2C beschrieben, mit dem Unterschied, daß, wie in Tabelle 3 angegeben, Poly-t-butylmethacrylate verschiedener Molekulargewichte mit verschiedenen Polyalkylenoxid-Homo- und -Copolymeren zur Reaktion gebracht werden.

Tabelle 3

| Beispiel | PtBMA aus Beispiel Nr. | Polyalkylenoxid aus Beispiel Nr. | Umsatz/OH-Zahl | Umsatz/GC (Methanol) | Mn/GPC | U = Mw/Mn |
|---|---|---|---|---|---|---|
| 1C | 1A | 1B | 91 | 96 | 2850 | 1,26 |
| 2C | 1A | 4B | 95 | 98 | 4300 | 1,44 |
| 3C | 1A | 3B | 95 | 97 | 5400 | 1,22 |
| 4C | 4A | 2B | 92 | 95 | 5250 | 1,29 |
| 5C | 2A | 5B | 96 | 101 | 2600 | 1,59 |
| 6C | 3A | 1B | 90 | 95 | 4600 | 1,48 |

Beispiel 1D

Herstellung eines Polymethacrylsäure-b-Polyethylenoxid-(AB- bzw. ABA)-Copolymeren

250 g des nach Beispiel 1C erhaltenen Blockcopolymeren werden mit ca. 6,3 g p-Toluolsulfonsäuremonohydrat vermischt und auf eine Temperatur von 95 bis 100 °C erwärmt. Die beginnende Abspaltung des Isobutens läßt sich an einer deutlichen Gasentwicklung erkennen. Diese ist nach einer Reaktionszeit von 4 h beendet; die Säurezahl des erhaltenen Produktes beträgt 230, was einem Umsatz von 96 % entspricht. NMR-spektroskopisch (Vergleich der Signalintensitäten der charakteristischen t-Butylgruppe) ergibt sich ein Umsatz von etwa 95 %.

Beispiele 2D bis 6D

Herstellung von verschiedenen Polymethacrylsäure-b-Polyethylenoxid-b-Polymethacrylsäure-(ABA)-Copolymeren

Es wird verfahren wie in Beispiel 1D, mit der Ausnahme, daß die Abspaltung des Isobutens in Beispiel 6D in Gegenwart von Dioxan als Lösungsmittel durchgeführt wird. Hierfür findet eine 50 %ige Lösung des Blockcopolymeren in Dioxan Verwendung.

In der Tabelle 4 finden sich die entsprechenden Beispiele; die aus der Säurezahl und die über NMR-Spektroskopie ermittelten Umsätze sind ebenfalls angegeben.

Tabelle 4

| Beispiel Nr. | Blockcopolymer aus Tab. 3 Beispiel Nr. | Säurezahl/mg KOH/g | Umsatz in %/Säurezahl[1] | Umsatz in %/NMR |
|---|---|---|---|---|
| 1D | 1C | 230 | 96 | 95 |
| 2D | 2C | 320 | 96 | 100 |
| 3D | 3C | 110 | 95 | 95 |
| 4D | 4C | 112 | 96 | 98 |

[1] unter Berücksichtigung der eingewogenen Menge an p-Toluolsulfonsäuremonohydrat

Tabelle 4 (fortgesetzt)

| Beispiel Nr. | Blockcopolymer aus Tab. 3 Beispiel Nr. | Säurezahl/mg KOH/g | Umsatz in %/Säurezahl[1] | Umsatz in %/NMR |
|---|---|---|---|---|
| 5D | 5C | 225 | 97 | 96 |
| 6D | 6C | 380 | 98 | 97 |

[1] unter Berücksichtigung der eingewogenen Menge an p-Toluolsulfonsäuremonohydrat

Beispiel E

Herstellung eines Polynatriummethacrylat-b-Polyethylenoxid-(AB)-Copolymeren

2,0 g des in Beispiel 1D dargestellten Polymethacrylsäure-b-Polyethylenoxids werden in 31 ml Wasser suspendiert, mit einigen Tropfen Phenolphthaleinlösung versetzt und mit insgesamt 7,3 ml 1n NaOH bis zum Umschlagspunkt versetzt. Mit zunehmendem pH-Wert erhält man eine steigende Löslichkeit des Blockcopolymeren in der wäßrigen Phase; am Neutralpunkt resultiert eine wasserklare Lösung.

Anwendungsbeispiel

In der anwendungstechnischen Prüfung wird die Wirkung der erfindungsgemäßen Blockcopolymeren als Dispergiermittel zur Dispergierung von Aluminiumoxid in Wasser untersucht.

Dafür werden zunächst 20 g Aluminiumoxid-Pulver (Aldrich, Korngröße < 10 μ) in 50 g Wasser (Blindwert) sowie in 50 g einer 0,1- bzw. 0,5 %igen wäßrigen Lösung der Blockcopolymeren unter starkem Rühren in einem Glasgefäß über einen Zeitraum von 24 h bei Raumtemperatur suspendiert; anschließend wird in einem geeichten Gefäß die Zeit bis zum ersten Auftreten einer Sedimentgrenze gemessen. Bei sehr guten Dispergatoren beträgt die Dauer dieses Absetzvorganges bis zu einigen Wochen, wohingegen schlechte Dispergatoren innerhalb weniger Stunden zu einer vollständigen Sedimentation führen.

In Tabelle 5 finden sich typische Sedimentationszeiten und zusätzlich Angaben zur Sedimentdichte, hier angegeben als Verhältnis aus gemessener Sedimentdichte zur bekannten Dichte von Aluminiumoxid. Auch die Sedimentdichte ist ein Maß für die Güte des Dispergators: je höher der prozentuale Wert, desto effektiver sind die stabilisierenden Eigenschaften des entsprechenden Dispergators.

Tabelle 5

| Blockcopolymer aus Beispiel | Konzentration mg Polymer/ml Wasser | Sedimentationszeit | Sedimentdichte/% |
|---|---|---|---|
| ohne (Blindwert) | - | 0,5 h | 22 |
| 1D | 1 | 35 h | 31 |
| 1D | 5 | 18 Tage | 49 |
| 4D | 1 | 28 h | 26 |
| 4D | 5 | 23 Tage | 51 |

Aus der Tabelle ergibt sich, daß die erfindungsgemäß zu verwendenden Blockcopolymere die gewünschten anwendungstechnischen Eigenschaften zeigen.

Es ist verständlich und dem Fachmann geläufig, daß diese Beispiele nur eine Auswahl der vorhandenen Möglichkeiten darstellen und keineswegs als Beschränkung anzusehen sind.

**Patentansprüche**

**1.** Blockcopolymere der allgemeinen Formeln

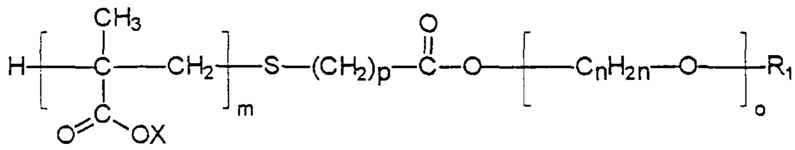

Formel I

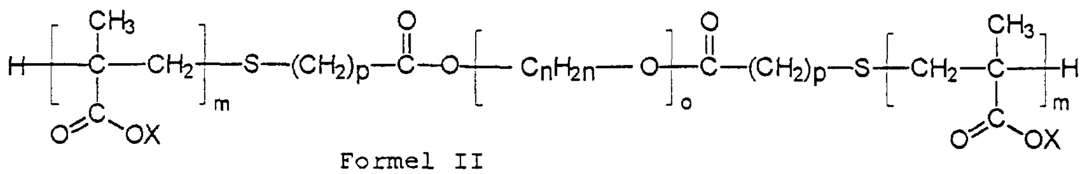

Formel II

wobei

| | |
|---|---|
| der Rest $R_1$ | einen Alkyl-, Alkaryl-, Alkenyl- oder Sulfopropylrest bedeutet, |
| m | einen mittleren Zahlenwert von ≥ 3 aufweist, |
| p | eine Zahl von 1 bis 6, |
| n | eine Zahl von 2 bis 18, |
| o | eine Zahl ≥ 1 und |
| X | ein Kation ist. |

**2.** Blockcopolymere nach Anspruch 1, dadurch gekennzeichnet, daß die Reste und Indices einzeln oder in Kombination folgende Bedeutung haben:

$R_1$ ist ein Alkyl- oder Alkenylrest mit 1 bis 8 Kohlenstoffatomen,
m weist einen mittleren Zahlenwert von 4 bis 20 auf,
p hat einen Wert von 2,
n hat einen Wert von 2 bis 3,
o hat einen mittleren Zahlenwert von 20 bis 100 und
X ist ein Wasserstoff-, Alkali- oder gegebenenfalls alkylsubstituierter Ammoniumrest.

**3.** Blockcopolymere der mittleren Formeln

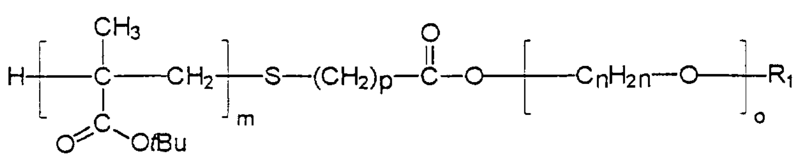

Formel III

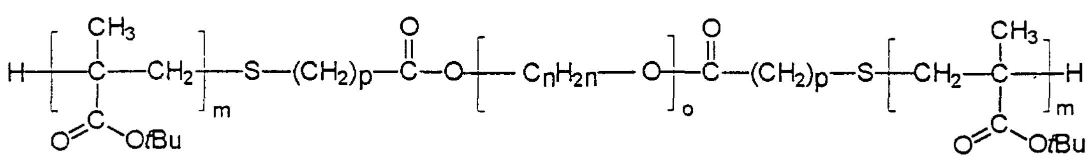

Formel IV

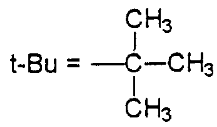

wobei die Reste und Indices die bereits angegebene Bedeutung haben, als Zwischenprodukt für die Herstellung der Blockcopolymeren gemäß Anspruch 1.

**4.** Verfahren zur Herstellung der Blockcopolymerisate nach Anspruch 1, dadurch gekennzeichnet, daß man

a) Polymerisate der allgemeinen Formel

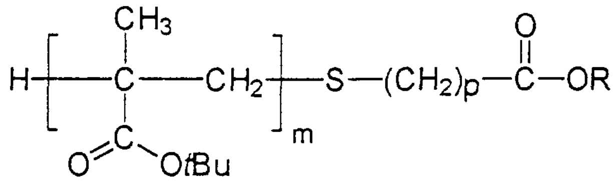

in der die Indices die bereits genannten Bedeutungen haben und der Rest R sich von einem an sich bekannten Kettenregler des Typs $ROC(O)-(CH_2)_p-SH$ ableitet, bei dem R ein Wasserstoff- oder Alkylrest mit 1 bis 12 Kohlenstoffatomen bedeutet, mit Polymerisaten der allgemeinen Formel

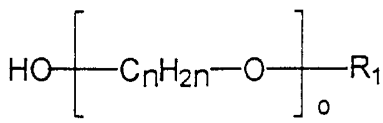

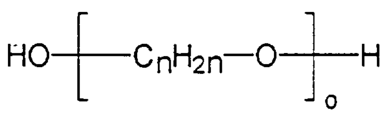

im Molverhälnis 1,1 : 1 bis 1,0 : 1,1 (zur Darstellung von AB-Blockcopolymeren) bzw. 1,1 : 0,5 bis 1,0 : 0,55 (zur Darstellung von ABA-Blockcopolymeren) unter Zusatz von an sich bekannten Katalysatoren, gegebenenfalls in Gegenwart eines inerten Lösungsmittels umestert und

b) die erhaltenen Polymerisate der allgemeinen Formeln III und IV bei Temperaturen oberhalb 60 °C in Gegenwart von Säure als Katalysator und gegebenenfalls eines Lösungsmittels oder oberhalb von 160 °C ohne Katalysator unter Abspaltung von Isobuten in die gewünschten Blockcopolymerisate der allgemeinen Formeln I und II überführt und

c) gegebenenfalls in an sich bekannter Weise in das Alkali- oder Ammoniumsalz umwandelt.

**5.** Verwendung der Blockcopolymeren nach Anspruch 1 oder 2 als Dispergiermittel oder Suspensionsstabilisatoren für Pigmente und Füllstoffe, z. B. von Metalloxiden in keramischen Werkstoffen, von Pigmenten in Tintenstrahlfarben und von Füllstoffen in thermo- und duroplastischen Kunststoffen.

## Claims

**1.** Block copolymer of the formula

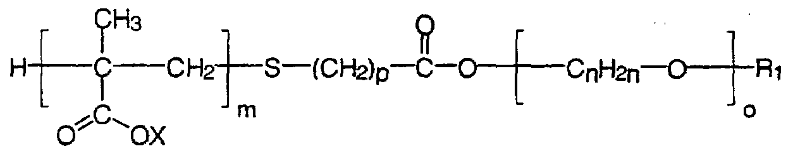

Formula I

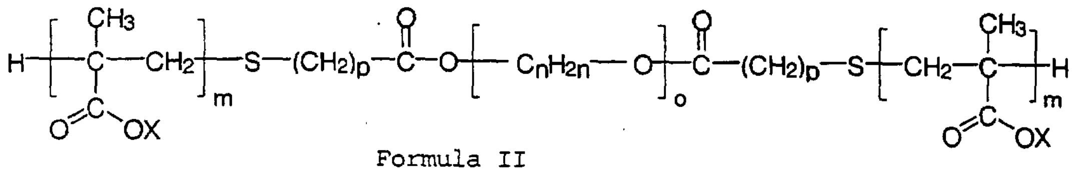

Formula II

where

the radical $R_1$ is an alkyl, alkaryl, alkenyl or sulfopropyl radical,
m has a mean numerical value of ≥ 3,
p is a number from 1 to 6,
n is a number from 2 to 18,
o is a number ≥ 1 and
X is a cation.

**2.** Block copolymer according to Claim 1, characterized in that the radicals and indices, either individually or in combination, have the following meanings:

$R_1$ is an alkyl or alkenyl radical having from 1 to 8 carbon atoms,
m has a mean numerical value of from 4 to 20,
p has a value of 2,
n has a value of from 2 to 3,
o has a mean numerical value of from 20 to 100 and
X is a hydrogen atom, an alkali metal atom or an unsubstituted or alkyl-substituted ammonium group.

**3.** Block copolymer of the mean formula

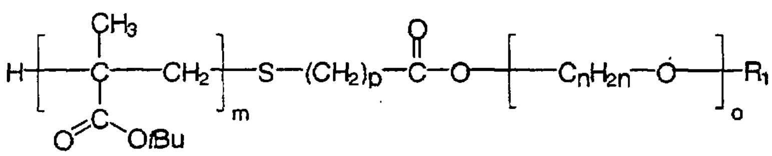

Formula III

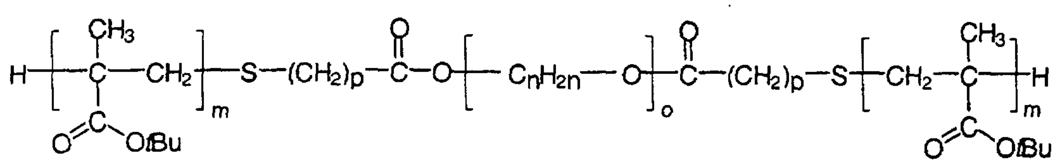

Formula IV

t-Bu =
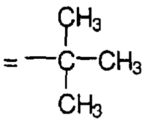

where the radicals and indices are as defined above, as intermediate for the preparation of the block copolymers according to Claim 1.

**4.** Process for preparing block copolymers according to Claim 1, characterized in that

a) polymers of the formula

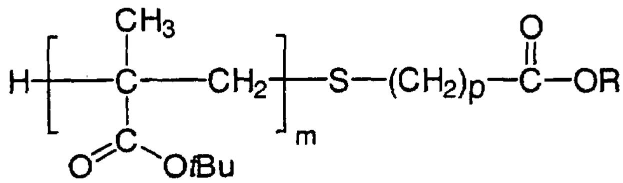

where the indices are as defined above and the radical R is derived from a chain regulator known per se of the type ROC(O)-$(CH_2)_p$-SH, where R is a hydrogen atom or an alkyl radical having from 1 to 12 carbon atoms, are transesterified with polymers of the formula

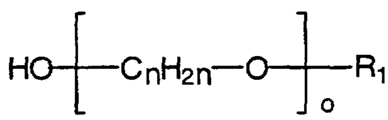

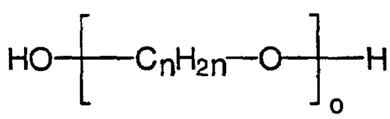

in a molar ratio of from 1.1 : 1 to 1.0 : 1.1 (for the preparation of AB block copolymers) or from 1.1 : 0.5 to 1.0 : 0.55 (for the preparation of ABA block copolymers) with the addition of catalysts known per se, if desired in the presence of an inert solvent, and

b) the resulting polymers of the formulae III and IV are converted into the desired block copolymers of the formulae I and II by elimination of isobutene at temperatures above 60°C in the presence of acid as catalyst and, if desired, a solvent or at above 160°C without catalyst and

c) if desired, the product is converted into the alkali metal or ammonium salt in a manner known per se.

**5.** The use of block copolymers according to Claim 1 or 2 as dispersants or suspension stabilizers for pigments and fillers, e.g. for metal oxides in ceramic materials, for pigments in inks used in ink jet printing and for fillers in thermoplastic and thermoset polymers.

**Revendications**

**1.** Copolymères à blocs de formules générales

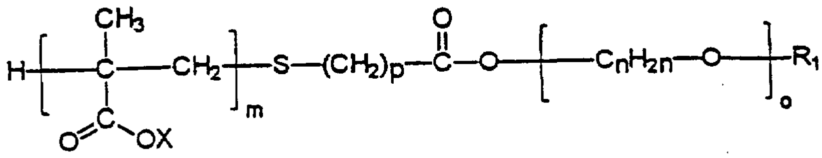

Formule I

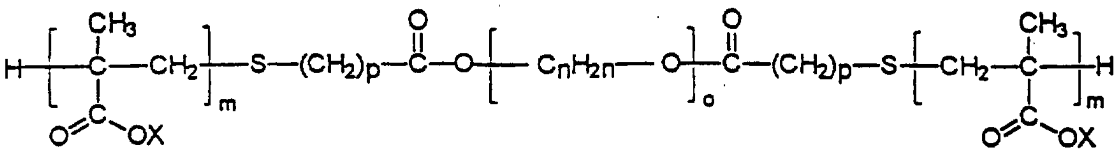

Formule II

dans lesquelles

le radical $R_1$ signifie un radical alkyle, alkaryle, alcényle ou sulfopropyle,
m représente une valeur numérique moyenne ≥ 3,
p est un nombre de 1 à 6,
n est un nombre de 2 à 18,
o est un nombre ≥ 1 et
X est un cation.

**2.** Copolymères à blocs selon la revendication 1, caractérisés en ce que les radicaux et indices ont, individuellement ou en combinaison, la signification suivante :

$R_1$ est un radical alkyle ou alcényle comprenant 1 à 8 atomes de carbone,
m représente une valeur numérique moyenne de 4 à 20,
p a une valeur de 2,
n a une valeur de 2 à 3,
o a une valeur numérique moyenne de 20 à 100 et
X est un radical ammonium substitué par un hydrogène, un alcali ou, le cas échéant, un alkyle.

**3.** Copolymères à blocs de formules moyennes

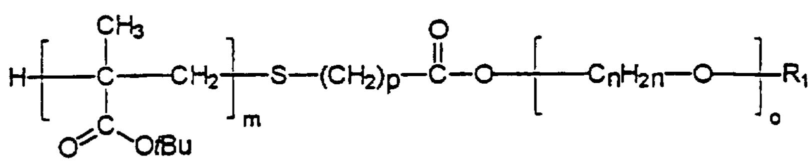

Formule III

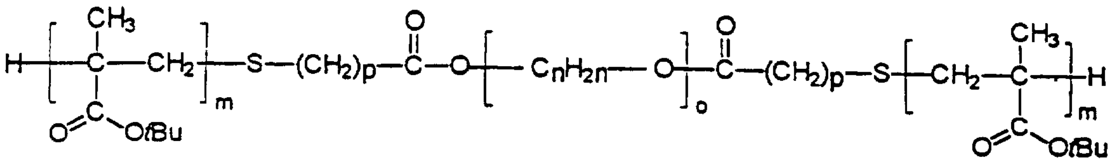

Formule IV

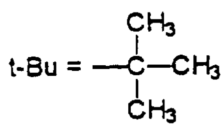

dans lesquelles les radicaux et les indices ont la signification déjà indiquée, comme produit intermédiaire pour la préparation des copolymères à blocs selon la revendication 1.

**4.** Procédé pour la préparation des copolymères à blocs selon la revendication 1, caractérisé

a) en ce qu'on transestérifie des polymères de formule générale

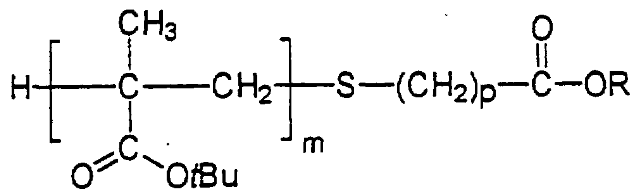

dans laquelle les indices ont les significations déjà mentionnées et le radical R est dérivé d'un régulateur de chaîne connu en soi du type $ROC(O)-(CH_2)_p-SH$, dans lequel R signifie un radical hydrogène ou alkyle comprenant 1 à 12 atomes de carbone, avec des polymères de formule générale

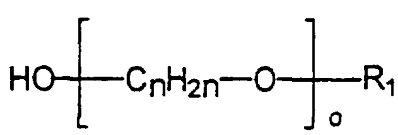

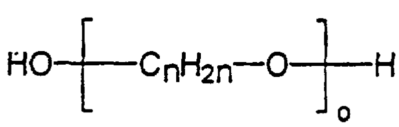

dans un rapport molaire de 1,1:1 à 1,0:1,1 (pour la préparation de copolymères à blocs AB) ou, selon le cas, de 1,1:0,5 à 1,0:0,55 (pour la préparation de copolymères à blocs ABA) avec addition de catalyseurs connus en soi, le cas échéant en présence d'un solvant inerte et

b) en ce qu'on transforme les polymères obtenus de formules générales III et IV en copolymères à blocs souhaités de formules générales I et II, à des températures supérieures à 60°C en présence d'acide comme catalyseur et, le cas échéant, d'un solvant ou, au-dessus de 160°C sans catalyseur, avec séparation d'isobutène et

c) en ce qu'on transforme, le cas échéant, de manière connue en soi en sel alcalin ou d'ammonium.

**5.** Utilisation des copolymères à blocs selon les revendications 1 ou 2 comme dispersants ou stabilisateurs de suspension pour des pigments et des charges, par exemple d'oxydes métalliques dans des matériaux céramiques, de pigments dans des encres pour jet d'encre et de charges dans des matières synthétiques thermoplastiques et thermodurcissables.